# EUROPEAN PATENT APPLICATION

(11) **EP 3 032 896 A1**
(43) Date of publication of application: **15.06.2016**
(21) Application number: 15196222.2
(22) Date of filing: 25.11.2015
(51) Int. Cl.: H04W 56/00

(54) **TIMING ADVANCE METHODS AND APPARATUSES**

(30) Priority: 12.12.2014 US 201414568932
(71) Applicant: Nokia Solutions and Networks Oy, 02610 Espoo (FI)
(72) Inventor: Frederiksen, Frank, 9270 Klarup (DK); Kolding, Troels Emil, 9270 Klarup (DK)
(74) Representative: Borgström, Markus

(57) **Abstract**

Systems, methods, apparatuses, and computer program products for defining a Time Advance (TA) value are provided. One method includes defining, by a network node, a timing advance value that is signaled to at least one user equipment. The timing advance value signaled to the user equipment exceeds a value that represents a physical distance between an antenna of a cell and the at least one user equipment.

## Description

### BACKGROUND:

### Field:

Embodiments of the invention generally relate to wireless communications networks, such as, but not limited to, the Universal Mobile Telecommunications System (UMTS) Terrestrial Radio Access Network (UTRAN), Long Term Evolution (LTE) Evolved UTRAN (E-UTRAN), LTE-Advanced (LTE-A), future 5G radio access technology, and/or High Speed Packet Access (HSPA).

### Description of the Related Art:

Universal Mobile Telecommunications System (UMTS) Terrestrial Radio Access Network (UTRAN) refers to a communications network including base stations, or Node Bs, and for example radio network controllers (RNC). UTRAN allows for connectivity between the user equipment (UE) and the core network. The RNC provides control functionalities for one or more Node Bs. The RNC and its corresponding Node Bs are called the Radio Network Subsystem (RNS). In case of E-UTRAN (enhanced UTRAN), no RNC exists and most of the RNC functionalities are contained in the enhanced Node B (eNodeB or eNB).

Long Term Evolution (LTE) or E-UTRAN refers to improvements of the UMTS through improved efficiency and services, lower costs, and use of new spectrum opportunities. In particular, LTE is a 3GPP standard that provides for uplink peak rates of at least 50 megabits per second (Mbps) and downlink peak rates of at least 100 Mbps. LTE supports scalable carrier bandwidths from 20 MHz down to 1.4 MHz and supports both Frequency Division Duplexing (FDD) and Time Division Duplexing (TDD).

As mentioned above, LTE may also improve spectral efficiency in networks, allowing carriers to provide more data and voice services over a given bandwidth. Therefore, LTE is designed to fulfill the needs for high-speed data and media transport in addition to high-capacity voice support. Advantages of LTE include, for example, high throughput, low latency, FDD and TDD support in the same platform, an improved end-user experience, and a simple architecture resulting in low operating costs.

Certain releases of 3GPP LTE (e.g., LTE Rel-11, LTE Rel-12, LTE Rel-13) are targeted towards international mobile telecommunications advanced (IMT-A) systems, referred to herein for convenience simply as LTE-Advanced (LTE-A).

LTE-A is directed toward extending and optimizing the 3GPP LTE radio access technologies. A goal of LTE-A is to provide significantly enhanced services by means of higher data rates and lower latency with reduced cost. LTE-A is a more optimized radio system fulfilling the international telecommunication union-radio (ITU-R) requirements for IMT-Advanced while keeping the backward compatibility. One the key features of LTE-A is carrier aggregation, which allows for increasing the data rates through aggregation of two or more LTE carriers.

### SUMMARY:

One embodiment is directed to a method, which may include defining, by a network node, a timing advance value that is signaled to at least one user equipment. The timing advance value signaled to the at least one user equipment exceeds a value that represents a physical distance between a processing hardware of the network node and the at least one user equipment.

In an embodiment, the method may further include configuring and setting the timing advance value depending upon a baseband processing delay of the network node. According to certain embodiments, the defining of the timing advance value may include introducing an offset to a timing advance value defined for a radio access technology, such as LTE, LTE-A, or HSPA. In one embodiment, the offset is used when a radius of the cell is smaller than around 100 km.

According to some embodiments, the offset is used when a combined delay of fronthaul delay and channel propagation delay do not exceed a maximum value defined for the radio access technology. In one embodiment, the offset is common to all user equipment in the cell. In certain embodiments, the offset is constant and the offset is defined through an automatic or manual configuration procedure.

In certain embodiments, the defined timing advance value does not represent the physical distance between the processing hardware and the user equipment. In an embodiment, the network node may comprise a base station.

Another embodiment is directed to an apparatus, which may include at least one processor and at least one memory including computer program code. The at least one memory and computer program code may be configured, with the at least one processor, to cause the apparatus at least to define a timing advance value that is signaled to at least one user equipment. The timing advance value signaled to the at least one user equipment exceeds a value that represents a physical distance between processing hardware of a cell and the at least one user equipment.

In an embodiment, the at least one memory and the computer program code are further configured, with the at least one processor, to cause the apparatus at least to configure and set the timing advance value depending upon a baseband processing delay of the apparatus. In one embodiment, the at least one memory and the computer program code are further configured, with the at least one processor, to cause the apparatus at least to introduce an offset to a timing advance value defined for a radio access technology, such as LTE, LTE-A, or HSPA.

In one embodiment, the offset is used when a radius of the cell is smaller than around 100 km. According to some embodiments, the offset is used when a combined delay of fronthaul delay and channel propagation delay do not exceed a maximum value defined for the radio access technology. In one embodiment, the offset is common to all user equipment in the cell. In certain embodiments, the offset is constant and the offset is defined through an automatic or manual configuration procedure.

In certain embodiments, the defined timing advance value does not represent the physical distance between the processing hardware and the user equipment. In an embodiment, the network node may comprise a base station.

Another embodiment is directed to a computer program, embodied on a non-transitory computer readable medium. The computer program may be configured to control a processor to perform a process, which may include defining, by a network node, a timing advance value that is signaled to at least one user equipment. The timing advance value signaled to the at least one user equipment exceeds a value that represents a physical distance between a processing hardware of the network node and the at least one user equipment.

### BRIEF DESCRIPTION OF THE DRAWINGS:

For proper understanding of the invention, reference should be made to the accompanying drawings, wherein:
Fig. 1 illustrates an example block diagram of a system, according to an embodiment;
Fig. 2 illustrates a graph depicting available RTT Fronthaul delay budget versus processing delay, time advance setting, and cell size assumption, according to an example embodiment;
Fig. 3a illustrates a block diagram of an apparatus, according to one embodiment;
Fig. 3b illustrates a block diagram of an apparatus, according to another embodiment;
Fig. 4a illustrates a flow diagram of a method, according to one embodiment; and
Fig. 4b illustrates a flow diagram of a method, according to another embodiment.

### DETAILED DESCRIPTION:

It will be readily understood that the components of the invention, as generally described and illustrated in the figures herein, may be arranged and designed in a wide variety of different configurations. Thus, the following detailed description of embodiments of systems, methods, apparatuses, and computer program products for defining an offset to the Time Advance (TA) value, as represented in the attached figures, is not intended to limit the scope of the invention, but is merely representative of some selected embodiments of the invention.

The features, structures, or characteristics of the invention described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with the embodiment may be included in at least one embodiment of the present invention. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more embodiments.

Additionally, if desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

In a traditional network layout, all base stations/access nodes (e.g., NodeBs or eNBs) are located at the physical location of the antennas transmitting and receiving the signals to and from the UEs. As cell sizes reduce, however, the cost of site rent and maintaining a large number of sites is becoming a more dominant factor for network operators (e.g., increased CAPEX for purchasing equipment and increased OPEX for site lease and equipment maintenance as well as power consumption).

Therefore, the trend is moving towards more centralized solutions, where more base station functionality is consolidated into centralized units which will do the processing, and the transmit/receive units will become "thin" in the sense that they will have reduced functionality compared to traditional base stations or eNBs. Such centralized processing will also have benefits from better scaling to the processing needs, as well as the possibility of utilizing processing power where it is needed (from a statistical point of view it is not likely that all cells in the network experience a full load at the same time). Essentially, use of cloud computing technologies may be utilized in order to ensure dynamic scalability of processing power and to pool computing resources across multiple cells. This is often referred to as Cloud RAN and such a platform may provide options for the operator to flexibly allocate processing to each processing site.

Establishing centralized radio access networks (C-RAN) may result in the establishment of a fronthaul interface between the baseband and the remote transmit/receive units. The fronthaul interface is often specified via the open base station architecture initiative (OBSAI) and common public radio interface (CPRI) standards. The establishment of fronthaul poses some significant challenges. For example, one challenge is how to provide for very high data rates, and the associated costs for increasing those rates. Also, another challenge is addressing very tight latency requirements, and the associated costs of decreasing latency. There are various compression techniques being discussed in order to reduce the effective bandwidth of the interface, but the latency challenge remains, which fundamentally follows from the 3GPP LTE specifications (specifically uplink transmissions). As will be discussed in detail below, some embodiments of the invention may provide ways to increase fronthaul round trip time (RTT) budget.

Therefore, one of the challenges with centralizing radio operations into larger units is that most radio systems rely on fairly strict and pre-determined relations between actions. One example is the hybrid automatic repeat request (HARQ) operation in LTE, which has been standardized such that a downlink (DL) transmission will be acknowledged by the UE within a time limit of 4 ms from when the UE receives the grant for the DL transmission. In the same way, the uplink (UL) HARQ is constructed in such a way that the UE expects to get information on potential retransmissions 4 ms after the UE starts transmitting its uplink signals. In general, it is not possible to modify these limits, as the entire UE and network operation rely on these timing conditions.

In addition, because it is proposed to create a larger physical separation between the processing hardware and the physical antenna unit, the time budget for the processing is correspondingly reduced. Hence, some embodiments provide a solution that would allow implementation of a physical separation between an antenna unit and processing unit of a base station, without impacting the need for processing power (although increasing processing power could also help expanding the possible physical separation). The processing unit of the base station may alternatively be referred to herein as a processing node or processing hardware.

For example, certain embodiments are directed to apparatuses and methods for defining an offset to the Timing Advance (TA) value signalled to the UE such that the used TA does not represent the physical separation between the processing unit (of the network node/base station) or the antenna and the UE. In an embodiment, the TA setting and configuration is dependent on the eNB baseband processing delay.

In LTE, a UE may transmit a Random Access Preamble when it wishes to establish a radio resource control (RRC) connection with an eNB. The eNB may then estimate the transmission timing of the terminal based on the received Random Access Preamble. Then, the eNB may transmit a Random Access Response which includes a timing advance command, which the UE may use to adjust the terminal transmit timing. Thus, the timing advance may be considered to be a negative offset, at the UE, between the start of a received DL subframe and a transmitted UL subframe. This offset at the UE ensures that all uplink subframes from various UE are synchronized at the eNB. Conventionally, a UE that is farther from the eNB encounters a larger propagation delay, so its uplink transmission is somewhat in advance as compared to a UE that is closer to the eNB. Traditional use of time advance is targeted at equalizing any differences in propagation delays between different UE in the cell coverage area.

Some embodiments of the invention are directed to "modifying" or "abusing" the properties of the TA signalling as defined for a radio access technology (RAT), for example as defined in the 3GPP specifications, to force the UE to finish its calculations earlier than it would normally. According to an embodiment, a TA value(s) is determined and signalled to the UE, such that the used TA does not represent the physical distance between the processing unit or the antenna and the UE (as it would normally under the 3GPP specifications). In one example embodiment of the invention, an offset to the TA value(s) is determined and the offset signalled to the UE.

For example, the base station (or processing unit) may measure the time offset between when the random access preamble is expected at the processing unit and when it was actually received. The signaled TA value may then be indicated to the UE. In case more time for processing is needed, an offset is added to the measured TA value. When the UE moves in the cell, the needed TA value may change, but the same offset can be used, so the signaled TA value will change as a function of the user location in the cell.

The processing unit would have measurements or values of the processing delays to the remote antenna as well as the maximum cell radius. It should be noted that the transmission delay in optical fibers is lower than the free space delay (e.g., roughly 2e8 m/s compared to free space of roughly 3e8 m/s), and there may be some time spent for the conversion between analog (electrical) signals and optical signals. Then, in the dimensioning of the system, the processing unit would measure this fixed delay to the remote antenna as well as the cell size. Knowing the budget for the overall processing, the processing unit may create the offset to be added to the TA value that is indicated to the UE. So, the processing unit will measure an offset that may be added to the signaled value.

Currently, in certain centralized RAN deployments, fronthaul length up to 10-20 kilometres may be in use. As mentioned above, fronthaul may refer to the connection between processing hardware or unit (e.g., baseband processing hardware) and the remote transmit/receive units (e.g., antennas). Hence, in these deployments, the TA setting compensates for fronthaul delay as a common delay for all users in the present cell, but the time advance setting would only compensate for the time delay from the output of the processing unit to the various UE connected to the cell.

However, according to some embodiments of the present invention, TA setting and configuration is made dependent on the eNB baseband processing delay, which would incur on top of any existing common distribution delay as described above. For example, in an embodiment, there may be an active planning/deployment process that goes through assessing available processing delay which in a cloud RAN solution can be scaled by adding more/less hardware resources or new generations of such hardware resources. Baseband latency can be more dynamic compared to today's SoC solutions where processing latency is "planned".

When planning the network layout for centralized RAN including RF location, fronthaul length, and thus baseband location, new factors are included in the dimensioning (baseband processing, fronthaul latency, maximum cell range). An embodiment targets the setting of a TA value for UEs that are connected to a given cell, which cannot be explained by the physical transmission delay from the processing unit to the UE.

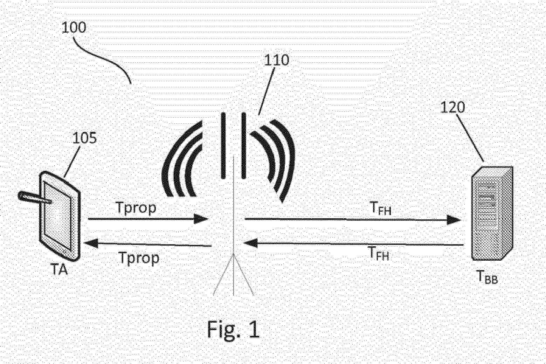

Fig. 1 illustrates an example of a system 100 according to an embodiment of the invention. In this embodiment, system 100 may include one or more user equipment 105, a radio frequency (RF) site 110, and a base band (BB) site 120. As mentioned above, BB 120 is an example of a centralized unit or hardware that performs the processing, which is separate from the RF site 110 that acts as the transmit/receive unit.

As depicted in Fig. 1, Tprop may refer to one-way propagation delay between UE 105 and RF site 110 including processing delays. T_{FH} may refer to one-way latency of fronthaul between the RF site 110 and BB site 120 including processing delays in either end. T_{BB} may refer to baseband processing delay between reception of a message from UE 105 to transmission of a response to the message. For example, in one embodiment, T_{BB} may refer to baseband processing delay between reception of a message transmitted on Physical Uplink Shared Channel (PUSCH) from UE 105 to transmission of an acknowledgement/non-acknowledgement (ACK/NACK) for the message. TA may refer to the time-advance setting that is set by the eNB to compensate for propagation delay, e.g., UE processing speed setting. It is noted that time-advance setting is specified in 3GPP TS 36.321, TS 36.213, and TS 36.211, where the maximum value is 0.6677 ms when evaluating the possible signaling values as defined in specifications for LTE. Other systems or RATs may have other maximum values.

In one example embodiment, the maximum RTT fronthaul latency allowed may be given by: 2 x T_{FH >=} (3ms + TA - 2Tprop - T_{BB}), wherein the 3ms is LTE specific parameter for handling an uplink signal and making a decision to transmit a downlink signal. As an example, TA = 2Tprop, T_{BB=2ms} → T_{FH} RTT ≦ 1.0 ms; or TA = 2Tprop+0.5ms, T_{BB}=2ms → T_{FH} RTT ≦ 1.5 ms. In some embodiments of the invention, when doing the network dimensioning, it should be considered what will be the maximum practical distance in the cell to a connected UE (determines Tprop) as this puts a restriction of how large we can compensate delays via time advance parameter. Then the fronthaul delay, and thus length, can be dimensioned based on available processing capacity planned for the baseband processing site. Or alternatively, in some embodiments of the invention, provided a certain fronthaul latency is needed, the baseband processing capacity in the central site can be increased accordingly. Over time, network algorithms may become more efficient and thus allow for larger fronthaul processing delays as well.

As mentioned above, certain embodiments of the invention are directed to methods that increase fronthaul latency. Some of these embodiments may relate to increasing processing speed and/or reducing cell size.

For example, one embodiment may be directed to increasing processing speed in the UE. In this embodiment, if increasing TA further than propagation delay, the UE conducts its processing faster to achieve timing (e.g., UE now compensates for part of the fronthaul latency).

Another embodiment may be directed to increasing processing speed in the eNB (same supported cell size as "default"). This leads to direct impact to available fronthaul latency.

Yet another embodiment may be directed to limiting supported cell size in the deployment (e.g., maximum range to UE). For example, it can be assumed a maximum value for Tprop according to smaller cell size as the delta between TA and 2xTprop impacts the available latency. For instance, for small cell or dense urban deployments, a bigger range of (TA-2Tprop) is available. It should be noted that this impacts also available random access channel (RACH) configuration settings (preamble formats).

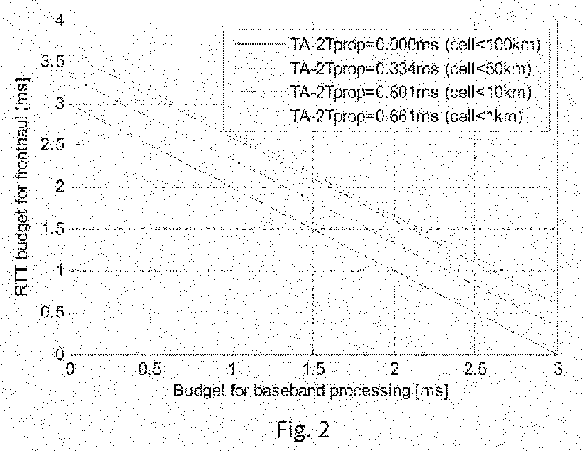

Fig. 2 illustrates a graph depicting available RTT Fronthaul delay budget versus processing delay, Time Advance setting, and cell size assumption, according to an example embodiment. As may be gathered from the sample results illustrated in the graph of Fig. 2, a significant increase of fronthaul budget is possible but may involve system performance degradation or cost increase for baseband processing (UE, eNB). The fronthaul RTT budget increases directly by any processing delay reduction in eNB side. Also, the fronthaul RTT budget increases directly by any increase for Time Advance setting. To avoid faster UE processing (e.g., maintained wide area TA setting), fronthaul can be deployed to cells that are limited in range.

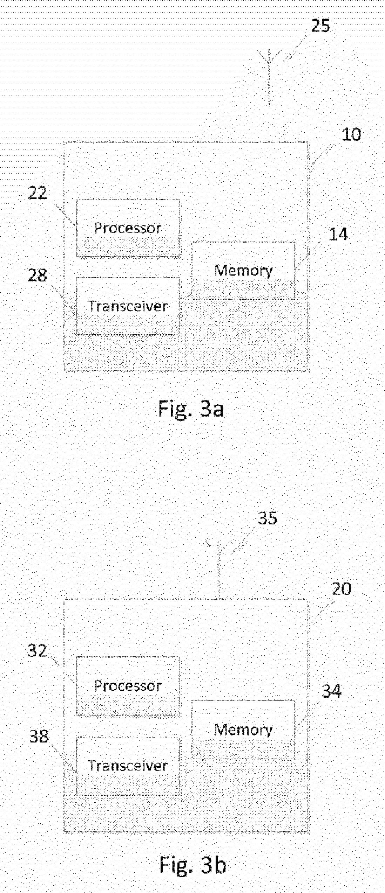

Fig. 3a illustrates an example of an apparatus 10 according to an embodiment. In an embodiment, apparatus 10 may be a node, host, or server in a communications network or serving such a network, such as a base station or eNB in LTE. It should be noted that one of ordinary skill in the art would understand that apparatus 10 may include components or features not shown in Fig. 3a.

As illustrated in Fig. 3a, apparatus 10 includes a processor 22 for processing information and executing instructions or operations. Processor 22 may be any type of general or specific purpose processor. While a single processor 22 is shown in Fig. 3a, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multicore processor architecture, as examples.

Apparatus 10 may further include or be coupled to a memory 14 (internal or external), which may be coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, or any other type of non-transitory machine or computer readable media. The instructions stored in memory 14 may include program instructions or computer program code that, when executed by processor 22, enable the apparatus 10 to perform tasks as described herein.

Apparatus 10 may also include or be coupled to one or more antennas 25 for transmitting and receiving signals and/or data to and from apparatus 10. Antennas 25 may be remote or physically separated by a distance from apparatus 10. Apparatus 10 may further include or be coupled to a transceiver 28 configured to transmit and receive information. For instance, transceiver 28 may be configured to modulate information on to a carrier waveform for transmission by the antenna(s) 25 and demodulate information received via the antenna(s) 25 for further processing by other elements of apparatus 10. In other embodiments, transceiver 28 may be capable of transmitting and receiving signals or data directly.

Processor 22 may perform functions associated with the operation of apparatus 10 which may include, for example, precoding of antenna gain/phase parameters, encoding and decoding of individual bits forming a communication message, formatting of information, and overall control of the apparatus 10, including processes related to management of communication resources.

In an embodiment, memory 14 may store software modules that provide functionality when executed by processor 22. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

In one embodiment, apparatus 10 may be a network node, such as a base station in a communications network or an eNB in LTE. For example, as discussed above, apparatus 10 may include a transmit/receive unit (e.g., antennas 25) and/or base band processing unit. In this embodiment, apparatus 10 may be controlled by memory 14 and processor 22 to define a timing advance (TA) value that is signaled to at least one UE. In an embodiment, the signaled TA value exceeds a value that represents a physical or geographical distance between a processing hardware of a cell and the at least one UE. In one embodiment, the defined timing advance value does not represent the physical distance between the processing hardware and the at least one UE. According to one embodiment, apparatus 10 may be controlled by memory 14 and processor 22 to configure and set the TA depending upon a baseband processing delay of the apparatus 10.

According to certain embodiments, apparatus 10 may be further controlled by memory 14 and processor 22 to define an offset to the timing advance value defined for a radio access technology, for example as specified in 3GPP specifications (e.g., 3GPP TS 36.321, TS 36.213, and TS 36.211). The radio access technology may include, for example, LTE, LTE-A, or high speed packet access (HSPA). In one embodiment, the offset may be used when a radius of the cell is smaller than around 100km. In some embodiments, the offset may be used when the combined delay of fronthaul delay and channel propagation delay do not exceed a maximum value defined for the radio access technology (e.g., the timing advance value specified in 3GPP specifications). In an embodiment, the offset may be common to all UEs in the cell. According to certain embodiments, the offset may be constant. In some embodiments, the offset may be defined through a configuration procedure that is automatic or manual.

Fig. 3b illustrates an example of an apparatus 20 according to another embodiment. In an embodiment, apparatus 20 may be a mobile device in a communications network, such as a UE in LTE. It should be noted that one of ordinary skill in the art would understand that apparatus 20 may include components or features not shown in Fig. 3b.

As illustrated in Fig. 3b, apparatus 20 includes a processor 32 for processing information and executing instructions or operations. Processor 32 may be any type of general or specific purpose processor. While a single processor 32 is shown in Fig. 3b, multiple processors may be utilized according to other embodiments. In fact, processor 32 may include one or more of general-purpose computers, special purpose computers, microprocessors, digital signal processors (DSPs), field-programmable gate arrays (FPGAs), application-specific integrated circuits (ASICs), and processors based on a multicore processor architecture, as examples.

Apparatus 20 may further include or be coupled to a memory 34, which may be coupled to processor 32, for storing information and instructions that may be executed by processor 32. Memory 34 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 34 can be comprised of any combination of random access memory (RAM), read only memory (ROM), static storage such as a magnetic or optical disk, or any other type of non-transitory machine or computer readable media. The instructions stored in memory 34 may include program instructions or computer program code that, when executed by processor 32, enable the apparatus 20 to perform tasks as described herein.

In some embodiments, apparatus 20 may also include or be coupled to one or more antennas 35 for transmitting and receiving signals and/or data to and from apparatus 20. Apparatus 20 may further include a transceiver 38 configured to transmit and receive information. For instance, transceiver 38 may be configured to modulate information on to a carrier waveform for transmission by the antenna(s) 35 and demodulate information received via the antenna(s) 35 for further processing by other elements of apparatus 20. In other embodiments, transceiver 38 may be capable of transmitting and receiving signals or data directly.

Processor 32 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

In an embodiment, memory 34 stores software modules that provide functionality when executed by processor 32. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

As mentioned above, according to one embodiment, apparatus 20 may be a mobile device in a communications network, such as a UE in LTE, or a modem or a chip inside the mobile device. In this embodiment, apparatus 20 may be controlled by memory 34 and processor 32 to receive a timing advance (TA) value from an eNB, which may be comprised of a transmit/receive unit and/or base band processing unit. The TA may be determined based on a defined offset. According to one embodiment, the offset to the TA may also be received by apparatus 20. In an embodiment, the received TA value exceeds a value that represents a physical or geographical distance between a processing hardware of a cell and the at least one UE (e.g., the TA value does not represent a physical distance between processing hardware of a cell that apparatus 20 is associated with and the at least one apparatus 20). According to one embodiment, the TA may be configured and set depending upon a baseband processing delay of the eNB. According to one embodiment, apparatus 20 may be controlled by memory 34 and processor 32 to adjust its transmit timing according to the received TA value that does not represent the physical distance between the antenna and apparatus 20, but rather may be configured according to the baseband processing delay of the eNB.

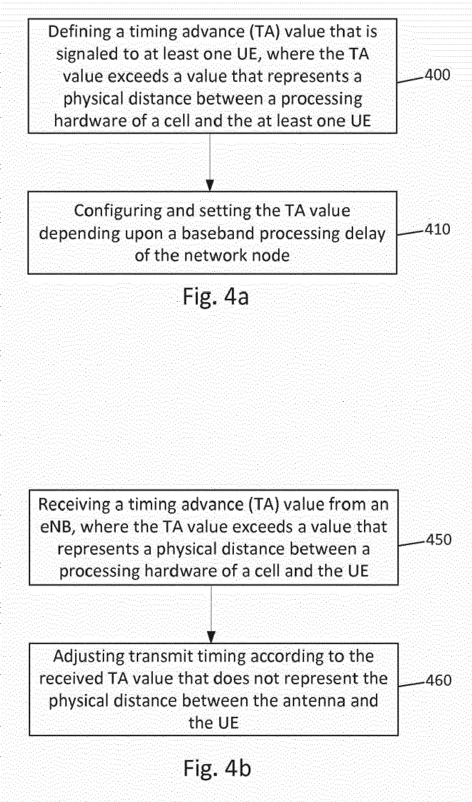

Fig. 4a illustrates an example flow diagram of a method according to one embodiment. In an embodiment, the method of Fig. 4a may be executed by a network node, such as a base station or eNB. For example, in certain embodiments, the method may be performed by a transmit/receive unit and/or a separate base band processing unit. The method may include, at 400, defining a timing advance (TA) value that is signaled to at least one UE, where the TA value exceeds a value that represents a physical distance between the processing unit of a cell and the at least one UE. For example, in an embodiment, the signaled TA value does not represent the physical distance between the processing unit of the cell (that the UE is associated with) and the at least one UE. According to one embodiment, the method may further include, at 410, configuring and setting the TA depending upon a baseband processing delay of the network node.

According to certain embodiments, the defining of the TA value may include introducing an offset to the timing advance value defined for a radio access technology (e.g., as specified in 3GPP specifications such as 3GPP TS 36.321, TS 36.213, and TS 36.211). In one embodiment, the offset may be used when a radius of the cell is smaller than around 100km. In some embodiments, the offset may be used when the combined delay of fronthaul delay and channel propagation delay do not exceed a maximum value defined for the radio access technology. In an embodiment, the offset may be common to all UEs in the cell. According to certain embodiments, the offset may be constant. In some embodiments, the offset may be defined through a configuration procedure that is automatic or manual.

The approach of using an offset to the TA value may not necessarily be used when dealing with extremely large cells, such as those with a radius of 100 km. However, such cells would normally not be used, as there would not be sufficient capacity in the cell to serve all users at the same time. On top of this, the link budget for the users at the cell edge would be so poor that the throughput for users at the cell edge would be virtually zero. The large possible TA value is basically a result from the system design, where it was a design parameter from signaling point of view to support 100 km cell size. The only requirement for applying this offset to the TA values would be that the combined delay of fronthaul and channel propagation should not exceed the maximum value that is possible to indicate with the TA value in the RACH response. If this limit is not exceeded, "the rest" can be given to the processing in the dimensioning process.

Fig. 4b illustrates an example flow diagram of a method according to one embodiment. In an embodiment, the method of Fig. 4b may be executed by a mobile device, such as a UE, or a modem or a chip inside the mobile device.. The method may include, at 450, receiving a timing advance (TA) value from an eNB (e.g., the eNB may be comprised of a transmit/receive unit and/or base band processing unit). According to one example embodiment, the TA has been determined based on a defined offset by the network node (e.g. a base station). According to one example embodiment, the offset to the TA may also be received by the UE. In an embodiment, the received TA does not represent a physical distance between an antenna of a cell (that the UE is associated with) and the UE. According to one embodiment, the TA may be configured and set depending upon a baseband processing delay of the eNB. According to one embodiment, the method may further include, at 460, the UE adjusting its transmit timing according to the received TA that does not represent the physical distance between the antenna and the UE, but rather may be configured according to the baseband processing delay of the eNB.

In some embodiments, the functionality of any of the methods described herein, such as those illustrated in Figs. 4 or 5 discussed above, may be implemented by software and/or computer program code stored in memory or other computer readable or tangible media, and executed by a processor. In other embodiments, the functionality may be performed by hardware, for example through the use of an application specific integrated circuit (ASIC), a programmable gate array (PGA), a field programmable gate array (FPGA), or any other combination of hardware and software.

Another embodiment may be directed to an apparatus including defining means for defining an offset to a timing advance (TA) value that is signaled to at least one UE. In an embodiment, the signaled TA exceeds a value that represents a physical distance between a processing hardware of a cell and the at least one UE. According to one embodiment, the apparatus may further include configuring means for configuring and setting the TA value depending upon a baseband processing delay of the apparatus.

Another embodiment may be directed to receiving means for receiving a timing advance (TA) value from an eNB (e.g., the eNB may be comprised of a transmit/receive unit and/or base band processing unit). In some embodiments of the invention, the TA is determined based on a defined offset by a network node (e.g. a base station). According to one example embodiment, the offset to the TA may also be received by the receiving means. In an embodiment, the received TA value exceeds a value that represents a physical distance between a processing hardware of a cell and the apparatus. According to one embodiment, the TA may be configured and set depending upon a baseband processing delay of the eNB. According to one embodiment, the apparatus may further include adjusting means for adjusting the transmit timing of the apparatus according to the received TA that does not represent the physical distance between the antenna and the apparatus, but rather may be configured according to the baseband processing delay of the eNB.

Thus, some embodiments of the invention provide example conclusions regarding the potential for increasing RTT budget for fronthaul. For instance, certain embodiments may increase RTT budget for IQ based fronthaul. For example, for a system that has been tested to work with maximum cell size assumption only when fronthaul RTT requirement is <1.0 ms, it can be estimated that the current effective baseband processing delay (PUSCH Rx to ACK/NACK Tx) is ∼2 ms. If it is assumed that cell size in dense urban area is < 10 km, then baseband processing delay can be reduced to 1.6 ms by utilizing the gap between maximum time advance value and the specifically needed time advance value that corresponds to the air interface latency. Further, by making hardware 25% faster, thus increasing CAPEX for Baseband to reduce fronthaul CAPEX, fronthaul latency up to 2.0 ms can be supported. This may result, for example, in a total improvement of 2x versus today's requirements, where increasing baseband processing produces 40% RTT gain, and the utilization of additional time advance provides 43% gain.

While certain embodiments discussed above may be described in reference to LTE, it should be noted that some embodiments of the invention are also applicable to other systems, such as HSPA. The system, regardless of type, may be configured to have "excess TA to spare" compared to the expected cell size in the deployed network.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A method, comprising:
defining, by a network node, a timing advance value that is signaled to at least one user equipment,
wherein the timing advance value signaled to the at least one user equipment exceeds a value that represents a physical distance between a processing hardware of the network node and the at least one user equipment.

2. The method according to claim 1, further comprising configuring and setting the timing advance value depending upon a baseband processing delay of the network node.

3. The method according to claim 1 or 2, wherein the defining of the timing advance value comprises introducing an offset to a timing advance value defined for a radio access technology.

4. The method according to any one of claims 1 - 3, wherein the defined timing advance value does not represent the physical distance between the processing hardware and the user equipment.

5. The method according to claim 3, wherein the offset is used when a radius of the cell is smaller than around 100 km.

6. The method according to claim 3 or 5, wherein the offset is used when a combined delay of fronthaul delay and channel propagation delay do not exceed a maximum value defined for the radio access technology.

7. The method according to claim 3, 5 or 6, wherein the offset is common to all user equipment in the cell.

8. The method according to any one of claims 3, 5 - 7, wherein the offset is constant and the offset is defined through an automatic or manual configuration procedure.

9. The method according to any one of claims 1 - 8, wherein the network node comprises a base station.

10. An apparatus, comprising:
means defining a timing advance value that is signaled to at least one user equipment,
wherein the timing advance value signaled to the at least one user equipment exceeds a value that represents a physical distance between processing hardware of a cell and the at least one user equipment.

11. The apparatus according to claim 10, comprising means to perform a method according to any one of claims 2 - 9.

12. An apparatus, comprising:
receiving means for receiving a timing advance value from a network node, wherein the received timing advance value exceeds a value that represents a physical distance between a processing hardware of the network node and the apparatus.

13. The apparatus according to claim 12, wherein the timing advance value is configured according to the baseband processing delay of the network node.

14. The apparatus according to claim 12 or 13, wherein the timing advance value is determined based on an offset by the network node.

15. The apparatus according to claim 14, comprising means to perform a method according to any one of claims 5 - 8.
